# FASCICULE DE BREVET EUROPEEN

(11) **EP 4 282 700 B1**
(45) Date de publication et mention de la délivrance du brevet: **16.04.2025**
(21) Numéro de dépôt: 23174663.7
(22) Date de dépôt: 22.05.2023
(51) Int. Cl.: B60N 2/12

(54) **SIÈGE POUR VÉHICULE**
SITZ FÜR EIN FAHRZEUG
SEAT FOR VEHICLE

(30) Priorité: 23.05.2022 FR 2204922
(43) Date de publication de la demande: 29.11.2023
(73) Titulaire: FAURECIA Sièges d'Automobile, 92000 Nanterre (FR)
(72) Inventeur: BOUZID, Farouk, 91220 BRETIGNY SUR ORGE (FR); ROCHE, Sylvain, 45290 VARENNES CHANGY (FR); EPAUD, David, 91510 LARDY (FR)
(74) Mandataire: Plasseraud IP

(56) Documents cités:
- FR-A1- 2 459 740
- FR-A1- 2 917 679

## Description

### Domaine technique

La présente description est relative à un siège de véhicule. Il est également décrit un procédé de mise en œuvre d'un tel siège de véhicule.

### Technique antérieure

Dans le domaine automobile, en particulier, il est connu un siège de véhicule configuré pour pouvoir présenter une position facilitant l'accès aux places situées derrière le siège (en anglais « *easy entry position »* ; dans la suite position dite d'« entrée facile »). Un tel siège est généralement mis en œuvre dans un véhicule comportant un nombre de paires de portières inférieur au nombre de rangées de sièges, pour permettre l'accès à la dernière rangée de sièges dans le véhicule, c'est-à-dire à la rangée de sièges disposée longitudinalement le plus à l'arrière du véhicule.

Classiquement, la position d'entrée facile correspond à une configuration du siège où un dossier du siège est incliné vers une assise du siège et ou le siège est avancé à l'avant des glissières. Généralement le siège comporte un moteur spécifique pour réaliser le passage d'une position nominale du siège vers une position à l'avant des glissières et un moteur spécifique pour réaliser le pivotement du dossier de siège vers l'assise. Le document FR 2459740A1 décrit un siège inclinable vers l'avant et monté sur une glissière longitudinale.

### Présentation de l'invention

Un premier but de la présente invention est de proposer un siège mettant en œuvre la position d'entrée facile pour un cout réduit.

Un deuxième but de la présente invention est de réaliser une aide à la mise en œuvre de la position d'entrée facile.

### Résumé de l'invention

La présente invention a pour objet un siège pour véhicule comprenant :
- un dossier ,
- une assise liée au dossier, l'assise comprenant au moins une rampe s'étendant selon une direction longitudinale et une butée s'étendant selon une direction transversale,
- au moins une glissière s'étendant selon la direction longitudinale, ladite au moins une glissière comportant un premier segment de glissière et un deuxième segment de glissière ,
- au moins un élément mobile apte à être déplacé selon la direction longitudinale par rapport à ladite au moins une glissière, l'assise étant montée pivotante par rapport à l'élément mobile autour d'un axe de pivotement dirigé selon la direction transversale,
- au moins un organe d'articulation fixe par rapport à ladite au moins une glissière, et
- une bielle de pivotement ayant au moins une première extrémité et une deuxième extrémité, la première extrémité étant articulée audit au moins un organe d'articulation autour d'un axe d'articulation dirigé selon la direction transversale, la deuxième extrémité étant propre à coulisser contre la rampe de l'assise lors du déplacement du au moins un élément mobile sur le premier segment de glissière, la bielle de pivotement étant conformée pour pousser contre la rampe et provoquer la rotation de l'assise autour de l'axe de pivotement, lors du déplacement du au moins un élément mobile sur le deuxième segment de glissière, la deuxième extrémité de la bielle étant en appui contre la butée.

Les caractéristiques exposées dans les paragraphes suivants peuvent, optionnellement, être mises en œuvre. Elles peuvent être mises en œuvre indépendamment les unes des autres ou en combinaison les unes avec les autres : De préférence, le déplacement du au moins un élément mobile, lorsque ledit au moins un élément mobile est positionné sur le premier segment de glissière, fait pivoter l'assise autour de l'axe de pivotement et déplacer simultanément ledit au moins un élément mobile lorsque ledit au moins un élément mobile est positionné sur le deuxième segment de glissière.

De préférence, le siège comporte un unique actionneur propre à déplacer uniquement ledit au moins un élément mobile, lorsque ledit au moins un élément mobile est positionné sur le premier segment de glissière, et à faire pivoter l'assise autour de l'axe de pivotement et déplacer simultanément ledit au moins un élément mobile lorsque ledit au moins un élément mobile est positionné sur le deuxième segment de glissière.

Avantageusement, un unique actionneur permet à la fois de déplacer le siège et de le faire pivoter.

De préférence, la bielle de pivotement comporte au moins une branche de pivotement et une première branche de fixation coudée par rapport à la branche de pivotement, ledit au moins un organe d'articulation est conformé pour posséder un premier profilé délimitant un premier logement s'étendant selon la direction transversale, la première branche de fixation étant agencée dans ledit premier logement.

De préférence, la bielle de pivotement est réalisée dans un matériau flexible, et dans lequel ledit au moins un organe d'articulation est propre à contraindre la bielle de pivotement dans une position dans laquelle sa deuxième extrémité pousse sur la rampe et contribue au pivotement de l'assise autour de l'axe de pivotement lors du déplacement du au moins un élément mobile sur le premier segment de glissière et sur le deuxième segment de glissière.

Avantageusement, la flexibilité de la bielle de pivotement et sa mise sous contrainte permet d'utiliser un actionneur 58 de plus faible puissance.

De préférence, la bielle de pivotement comporte une deuxième branche de fixation coudée par rapport à la première branche de fixation, la au moins une branche de pivotement et la première branche de fixation étant disposées dans un plan, la deuxième branche de fixation formant un angle supérieur à 20° avec ledit plan, et de préférence supérieur à 40°, et dans lequel l'organe d'articulation est conformée pour posséder un deuxième profilé délimitant un deuxième logement s'étendant selon la direction longitudinale, la deuxième branche de fixation étant agencée dans ledit deuxième logement.

De préférence, le siège comporte un dispositif d'ancrage propre à verrouiller le pivotement de l'assise par rapport à ledit au moins un élément mobile, lors du déplacement du au moins un élément mobile sur le premier segment de glissière, le dispositif d'ancrage étant déverrouillé, lors du déplacement du au moins un élément mobile sur le deuxième segment de glissière.

De préférence, le siège comprend deux glissières parallèles distantes selon la direction transversale, et dans lequel la bielle de pivotement présente une forme générale en U ayant une branche centrale d'appui, deux branches de pivotement, deux premières branches de fixation et deux deuxièmes branches de fixation.

De préférence, le matériau flexible est réalisé en acier-ressort.

De préférence, ledit actionneur est un moteur électrique, ledit actionneur étant propre à déplacer ledit au moins un élément mobile du deuxième segment de glissière vers le premier segment de glissière, ledit actionneur et la bielle de pivotement entrainant la rotation de l'assise autour de l'axe de pivotement dans un sens horaire et le déplacement de l'assise selon la direction longitudinale lorsque l'élément mobile est déplacé sur le premier segment de glissière.

De préférence, le siège comporte en outre un organe de commande conformé pour déverrouiller le dispositif d'ancrage et un contrôleur propre à transmettre une commande de déverrouillage à l'organe de commande, lorsque l'assise est déplacée du premier segment de glissière vers le deuxième segment de glissière.

De préférence, le dispositif d'ancrage est propre à être déverrouillé manuellement quel que soit la position de l'élément mobile sur le premier segment de glissière et sur le deuxième segment de glissière.

De préférence, ledit au moins un élément mobile se déplace uniquement sur le premier segment de glissière pour le réglage de la position longitudinale de l'assise, le dispositif d'ancrage étant maintenu verrouillé.

De préférence, le siège comporte une platine fixée à ladite au moins une glissière, ledit au moins un organe d'articulation étant fixé sur ladite platine.

De préférence, ledit au moins un organe d'articulation est destiné à être fixé à un plancher d'un véhicule automobile.

De préférence, la rampe et la butée sont formées par un support comportant une lumière dans laquelle la deuxième extrémité de la bielle de pivotement est propre à se déplacer.

De préférence, le premier segment de glissière présente une longueur comprise entre 50 et 180 millimètres, et de préférence égale à 150 millimètres, et dans lequel le deuxième segment de glissière présente une longueur comprise entre 30 et 70 millimètres, de préférence égale à 50 millimètres.

L'invention a également pour objet un véhicule automobile comportant un siège tel que mentionné ci-dessus.

### Brève description des figures

[Fig. 1] est une vue de côté du siège selon un exemple de réalisation de l'invention ;
[Fig. 2] est une vue de dessous du siège illustré sur la figure 1 ;
[Fig. 3] est une vue en perspective d'une partie du siège illustré sur la figure 1 ;
[Fig. 4] est une vue en perspective d'une bielle de pivotement du siège illustré sur la figure 1 ;
[Fig. 5] est une vue de côté représentant quatre positions successives du siège 2 lors du passage du siège d'une position nominale à une position dite d'entrée facile ;
[Fig. 6] est une vue de côté représentant deux positions successives du siège 2 lors du passage du siège d'une position nominale à une position dite de sortie d'urgence.

### Description détaillée de l'invention

Sur les différentes figures, les mêmes références désignent des éléments identiques ou similaires.

Dans la description qui suit, les indications de positionnement dans l'espace telles que haut, bas, supérieur, inférieur, horizontal, vertical etc. sont données pour la clarté de l'exposé, en fonction de la position d'utilisation usuelle du siège, mais ne sont pas limitatives. Plus particulièrement, les orientations relatives à l'avant et à l'arrière du siège sont relatives à la position d'utilisation usuelle du siège.

Par direction longitudinale X, on entend une direction horizontale s'étendant entre l'avant et l'arrière du siège de véhicule. Par direction transversale Y, on entend une direction horizontale, s'étendant depuis un côté du siège de véhicule vers l'autre côté du siège de véhicule. Par direction verticale Z, on entend la direction perpendiculaire aux directions longitudinale X et transversale Y.

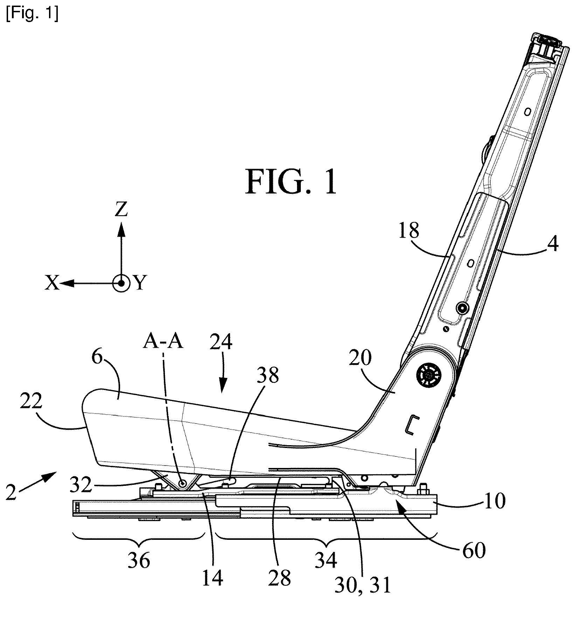

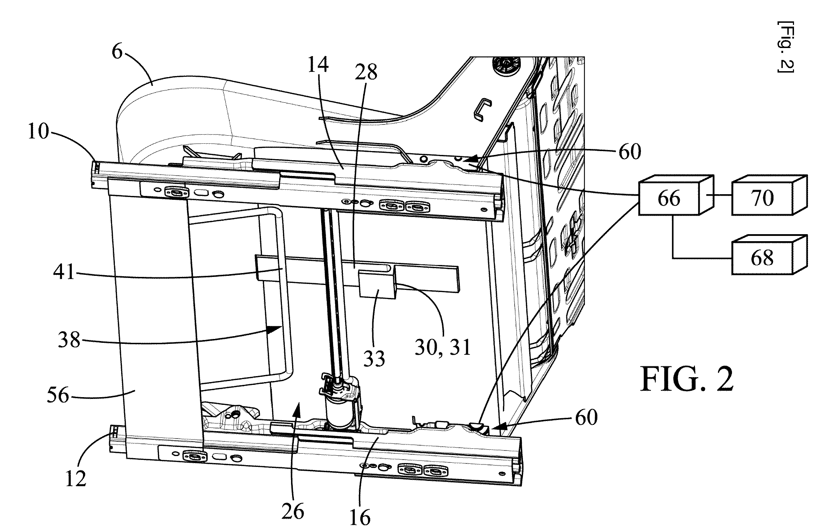

Tel qu'illustré sur les figures 1 et 2, un siège de véhicule 2 comporte essentiellement un dossier 4, une assise 6, deux glissières 10,12 et deux éléments mobiles 14,16 déplaçable le long des glissières

Le siège 2 peut être, par exemple, un siège avant d'un véhicule automobile à trois portières. Une portière peut être disposée longitudinalement au niveau du siège. Un autre siège peut être disposée longitudinalement derrière le siège. Le véhicule automobile peut être dépourvu de portière disposée longitudinalement au niveau de l'autre siège. Le siège peut, selon une autre variante, être un siège de deuxième rangée de sièges, notamment dans un véhicule à cinq portes comprenant trois rangées de sièges.

Le dossier 4 comporte ici une armature de dossier 18 et un piètement 20. L'armature de dossier est ici montée pivotante par rapport au piètement à l'aide d'un mécanisme d'articulation non représenté. Le mécanisme d'articulation est disposé de chaque côté du siège, entre le dossier et le piètement. Dans l'exemple illustré, le piètement 20 prend la forme de deux montants latéraux, reliés ensemble par une traverse et fixé à l'assise.

L'assise 6 comprend un cadre d'assise 22 pourvu de ressorts et d'un garnissage. Elle comporte une face supérieure 24 destinée à réceptionner un occupant et une face inférieure 26 opposée à la face supérieure. La face inférieure est située en vis-à-vis du plancher du véhicule, lorsque le siège est monté dans le véhicule.

En variante, l'assise et le dossier sont formée par une coque semi-rigide.

L'assise comporte en outre sur sa face inférieure, une rampe 28 ainsi qu'une butée 30 agencée à l'extrémité de la rampe. Dans le mode de réalisation représenté, la rampe 28 est formée par un support plan s'étendant selon la direction longitudinale X.

La butée 30 comprend une patte 31 contenue dans un plan (Y, Z) et qui s'étend au moins selon une direction transversale Y. Dans le mode de réalisation représenté, la patte 31 se prolonge par une extension de patte 33 courbée par rapport à la patte 31. La patte 31 est sensiblement perpendiculaire à la face inférieure de l'assise. L'extension de patte 33 est sensiblement parallèle à la face inférieure de l'assise. La rampe 28 et l'extension de patte 33 forment un guide longitudinal propre à recevoir une extrémité d'une bielle de pivotement, comme explicité ultérieurement.

En variante, la butée 30 comporte uniquement la patte 31.

En variante, l'ensemble de la rampe 28 et la butée 30 sont formées par un support comportant une lumière s'étendant selon la direction longitudinale X. Dans ce cas, la deuxième extrémité de la bielle est propre à coulisser dans la lumière.

En variante, l'assise comporte deux rampes 28 disposées sensiblement au-dessus d'une partie des glissières 10, 12, le long des côtés latéraux du cadre de l'assise 22.

L'assise 6 est portée par les éléments mobiles 14, 16. L'assise est propre à se déplacer selon la direction longitudinale X lors du déplacement des deux éléments mobiles 14,16 le long des glissières. L'assise est également montée pivotante par rapport aux éléments mobiles 14, 16. A cet effet, l'assise comporte deux plaquettes d'attache 32 articulées aux éléments mobiles 14, 16 autour d'un axe de pivotement A-A dirigé selon la direction transversale Y. Les deux plaquettes d'attache sont agencées sur les parties avant latérales du cadre de l'assise.

Les glissières 10, 12 sont destinées à être fixées au plancher de l'habitacle d'un véhicule automobile. Les glissières sont distantes l'une de l'autre, dans la direction transversale Y. Les deux glissières sont ici parallèles. Pour les besoins de la description de la présente invention, on définit un premier segment de glissière 34 situé du côté arrière du siège et deuxième segment de glissière 36 situé du côté avant du siège. Le premier segment de glissière présente une longueur comprise entre 50 et 180 millimètres. De préférence, le premier segment de glissière présente une longueur égale à 150 millimètres. Le deuxième segment de glissière présente une longueur comprise entre 30 et 70 millimètres. De préférence, le deuxième segment de glissière présente une longueur égale à 50 millimètres.

En référence aux figures 2 à 4, le siège 2 comporte en outre une bielle de pivotement 38 apte à provoquer la rotation du siège autour de l'axe de pivotement A-A et deux organes d'articulation 40 de la bielle de pivotement.

Dans le mode de réalisation représenté, la bielle de pivotement 38 présente deux premières extrémités 37, 39 et une deuxième extrémité 41. Chaque première extrémité 39 est articulée à un organe d'articulation 40 autour d'un axe d'articulation B-B dirigé selon la direction transversale Y. La deuxième extrémité 41 est en appui soit contre la rampe 28 de l'assise soit contre la butée 30.

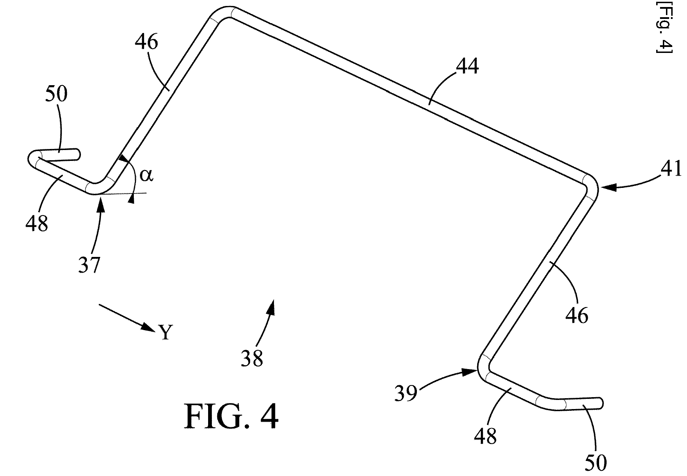

En référence à la figure 4, dans le mode de réalisation représenté, la bielle de pivotement 38 présente une forme générale en U ayant une branche centrale d'appui 44 formant la deuxième extrémité 41, deux branches de pivotement 46 coudées par rapport à la branche centrale d'appui, et une première et une deuxième branches de fixation 48, 50 agencées à l'extrémité de chaque branche de pivotement. Un ensemble de première et deuxième branches de fixation 48, 50 forme la première extrémité référencée 37 de la bielle de pivotement. Un autre ensemble de première et deuxième branches de fixation 48, 50 forme l'autre première extrémité référencée 39 de la bielle de pivotement. La première branche de fixation 48 s'étend selon la direction transversale Y. La deuxième branche de fixation 50 s'étend sensiblement perpendiculairement à la première partie de fixation. La branche centrale d'appui 44 est agencée selon la direction transversale Y.

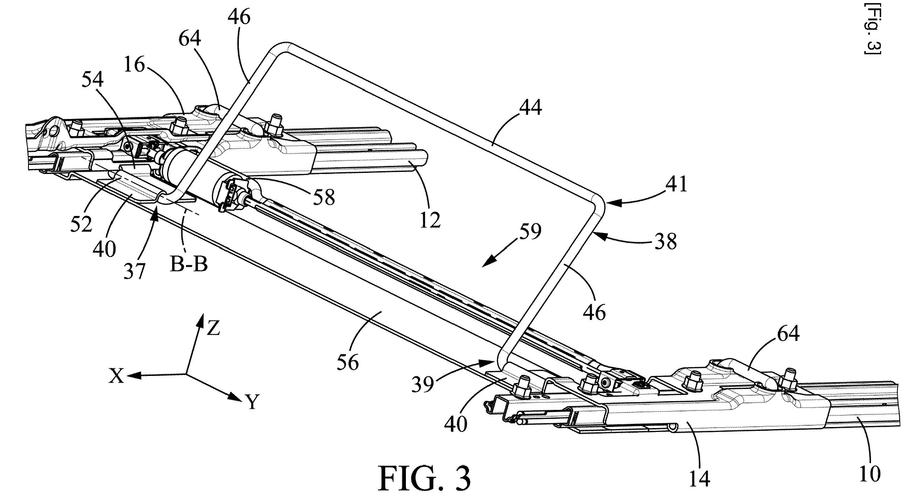

En référence à la figure 3, l'organe d'articulation 40 est par exemple formé par une plaque métallique conformée pour posséder un premier profilé 52 s'étendant selon la direction transversale Y et un deuxième profilé 54 s'étendant selon la direction longitudinale X. Le premier profilé délimite un premier logement. Le deuxième profilé délimite un deuxième logement.

De chaque côté de la bielle de pivotement 38 et pour chaque organe d'articulation 40, la première branche de fixation 48 est agencée dans le premier logement. La deuxième branche de fixation 50 est agencée dans le deuxième logement. La bielle de pivotement 38 est apte à pivoter autour d'un axe transversal Y traversant la première branche de fixation 48.

Dans le mode de réalisation représenté, la bielle de pivotement 38 est réalisée dans un matériau flexible. Par exemple, la bielle de pivotement 38 est réalisée en acier ressort.

La bielle de pivotement est conformée de manière que, au repos, c'est-à-dire sans contrainte, la branche centrale d'appui 44, les branches de pivotement 46 et les premières branches de fixation 48 sont disposées dans un même plan. Les deuxièmes branches de fixation 50 s'étendent avec un angle α par rapport à ce plan. L'angle α est supérieur à 20°. De préférence, l'angle α est supérieur à 40°. Ainsi, lorsque la bielle de pivotement 38 est montée dans les organes d'articulation 40 et qu'elle n'est pas contrainte, elle s'étend dans un plan formant un angle α par rapport à un plan horizontal.

En variante, la bielle de pivotement comprend uniquement des premières branches de fixation s'étendant selon la direction transversale Y et pas de deuxièmes branches de fixation. Dans ce cas, l'organe d'articulation 40 comprend uniquement un profilé s'étendant selon la direction transversale Y. La bielle de pivotement peut ici être réalisée dans un acier classique.

En variante, la bielle de pivotement 38 est remplacée par deux bielles de pivotement ayant chacune une branche de pivotement 46, une première branche de fixation 48 et éventuellement une deuxième branche de fixation 50. Dans ce cas, la bielle de pivotement 38 ne comporte pas de branche centrale d'appui. Les deuxièmes extrémités des bielles sont alors en appui contre la rampe 28 ou la butée 30.

De préférence, le siège comporte une platine 56 fixée aux glissières 10, 12. Les organes d'articulation 40 sont fixés sur cette platine 56. En variante, les organes d'articulation 40 sont fixés directement sur le plancher de la caisse du véhicule.

Les organes d'articulation 40 sont fixes par rapport aux glissières. Ils sont par exemple fixés aux glissières directement ou par l'intermédiaire d'une pièce supplémentaire. En variante, les organes d'articulation 40 sont directement fixés au plancher du véhicule.

Le siège comporte en outre un actionneur 58 et un mécanisme d'entrainement 59 propre à déplacer les éléments mobiles 14, 16 sur les glissières. L'actionneur 58 et le mécanisme d'entrainement 59 sont portés par les éléments mobiles 14, 16. Le mécanisme d'entrainement 59 des éléments mobiles sur les glissières est connu en soi. La demande de brevet publiée sous le numéro FR 2 882 974 décrit un exemple d'un tel mécanisme.

De préférence, l'actionneur 58 est un moteur électrique. Ce moteur électrique entraine les éléments mobiles 14, 16 en déplacement sur les glissières 10, 12 et permet à la fois de faire pivoter l'assise autour de l'axe de pivotement A-A et de déplacer simultanément les éléments mobiles sur le deuxième segment de glissière 36, comme décrit ultérieurement.

Avantageusement, un unique moteur permet à la fois de réaliser la fonction de réglage de la position longitudinale de l'assise et la mise en place de la position dite d'entrée facile.

De préférence, le siège comporte deux dispositifs d'ancrage 60 propres à verrouiller le pivotement de l'assise autour de l'axe de pivotement A-A par rapport aux éléments mobiles 14, 16.

Un dispositif d'ancrage 60 est ménagé entre chacun des montants latéraux du piétement 20 et un élément mobile. Chaque dispositif d'ancrage comporte un pêne 62 et une gâche 64. Le pêne 62 est monté rotatif autour d'un axe transversal sur le montant latéral du piètement 20. La gâche 64 est fixée sur l'élément mobile 14,16. Le pêne 62 est normalement au moins partiellement reçu dans la gâche 64 pour solidariser le piètement 20 de l'assise et l'élément mobile 14,16.

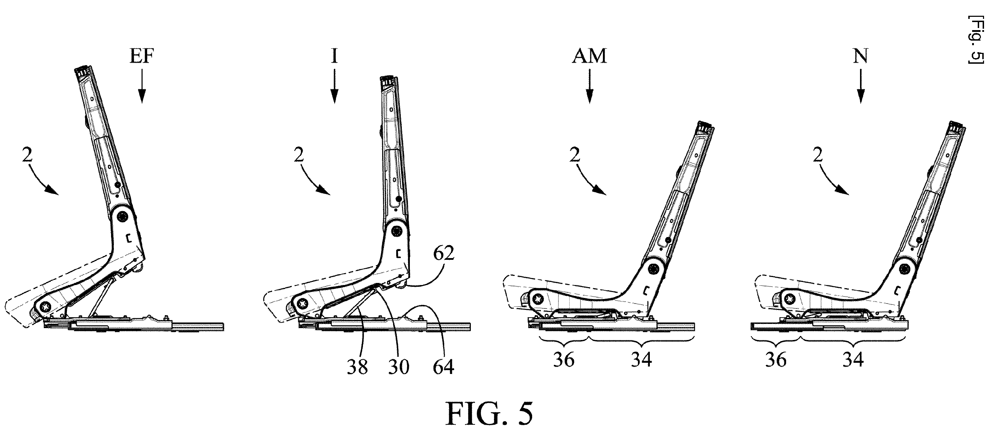

En référence aux figures 2 et 5, le siège 2 comporte de plus un organe de commande 66 permettant de déverrouiller de manière synchronisée les deux dispositifs d'ancrage. Par exemple, l'organe de commande 66 comprend un actionneur mécanique. L'organe de commande est conformé pour commander une rotation du pêne 62 autour de l'axe transversal, libérant totalement le pêne de la gâche. Le pêne est par exemple contraint élastiquement vers une position de déverrouillage du dispositif d'ancrage, l'organe de commande 66 bloquant, dans sa position de verrouillage, le pivotement du pêne. Au contraire, dans une position de déverrouillage, l'organe de commande 66 autorise le pivotement du pêne vers sa position de déverrouillage.

Le dispositif d'ancrage 60 est également propre à être déverrouillé manuellement. Ce déverrouillage peut être mis en œuvre quel que soit la position de l'élément mobile 14,16 sur le premier segment de glissière 34 ou sur le deuxième segment de glissière 36. A cet effet, le siège 2 comporte un organe de déverrouillage relié à l'organe de commande 66. L'organe de déverrouillage est constitué par exemple par une sangle 68. La sangle 68 est propre à commander l'organe de commande 66 afin que celui-ci déverrouille les dispositifs d'ancrage 60. La sangle 68 est par exemple dirigée vers les sièges disposés derrière le siège 2. Elle peut ainsi être actionnée par les passagers des sièges arrière pour libérer le pivotement de l'assise. L'actionnement peut être mis en œuvre en tirant sur la sangle.

Enfin, le siège 2 comporte en outre et un contrôleur 70 propre transmettre une commande de déverrouillage à l'organe de commande 66, lorsque l'assise est déplacée du premier segment de glissière 34 vers le deuxième segment de glissière 36. Le contrôleur 70 est par exemple actionné par un bouton de commande situé près de la portière située en regard du siège 2, comme décrit ultérieurement. Le contrôleur peut être un appareil programmable qui utilise un logiciel, un circuit intégré spécifique (ASIC) ou une partie de l'unité de commande d'un moteur (ECU).

La figure 5 illustre un premier exemple de procédé de mise en œuvre du siège 2 permettant le passage du siège, d'une position nominale N illustrée à droite à une position dite « d'entrée facile » EF illustrée sur la gauche.

Dans le mode de réalisation représenté, en position nominale N, l'assise 6 est positionnée à une position arrière maximale. Les éléments mobiles 14,16 sont positionnés le plus à l'arrière possible du premier segment de glissière 34. Il est à noter que la position nominale de départ peut varier. En effet, la position longitudinale du siège 2 peut être différente. Ainsi, la position longitudinale des éléments mobile 14,16 peut à priori varier sur toute la plage du premier segment de glissière 34. Dans cette position, la bielle de pivotement 28 est contrainte élastiquement sous le siège contre la rampe 28.

En référence à la figure 5, lorsqu'une demande de passage à la position « entrée facile » EF est demandée par un passager ou un futur passager par exemple par appui sur le bouton de commande. La demande est transmise au contrôleur 70. Le contrôleur transmet une commande à l'actionneur 58. L'actionneur 58 entraine le déplacement des éléments mobiles 14, 16 sur le premier segment de glissière 34. Lors de ce déplacement, la deuxième extrémité 41 de la bielle de pivotement 38 coulisse sur la rampe 28. La bielle de pivotement 38 est toujours contrainte élastiquement contre la rampe 28.

Lorsque les éléments mobiles 14, 16 atteignent le début du deuxième segment de glissière 36, la deuxième extrémité 41 de la bielle de pivotement est en appui contre la butée 30. Le siège est dans une position avant maximale AM, illustrée sur la figure 5.

Le contrôleur 70 transmet à l'organe de commande 66 une commande de déverrouillage des dispositifs d'ancrage 60. L'organe de commande 66 retransmet cette commande aux dispositifs d'ancrage 60. Les dispositifs d'ancrage commandent la rotation des pênes 62 et déverrouille l'ancrage de la partie arrière du cadre de siège aux éléments mobiles 14, 16. L'actionneur 58 continue à entrainer en déplacement les éléments mobiles 14, 16. Comme la deuxième extrémité 41 de la bielle de pivotement est en butée contre la butée 30, l'assise 6 pivote autour de l'axe de pivotement A-A poussé par la deuxième extrémité de la bielle et contraint par la bielle de pivotement 38 qui cherche à retrouver sa position sans contrainte. La bielle de pivotement est bandée sous le siège pour soulager l'actionneur 58 lors du pivotement de l'assise. La bielle de pivotement 38 pousse contre la rampe 28 et provoque la rotation de l'assise autour de l'axe de pivotement A-A et dans un sens anti-horaire, lors du déplacement du au m élément mobile 14, 16 sur le deuxième segment de glissière 36. Simultanément, les éléments mobile 14, 16 continuent de déplacer l'assise 6 sur le deuxième segment de glissière 36 comme illustrée sur la position intermédiaire I illustrée sur la figure 5.

Lorsque les éléments mobiles 14, 16 sont positionnés à l'extrémité du deuxième segment de glissière 36, le siège 2 est dans la position dite d'entrée facile.

Pour retourner dans sa position nominale, l'actionneur 58 est entrainé en sens inverse. Il entraine les éléments mobiles 14,16 en déplacement des deuxièmes segments de glissière 36 vers les premiers segments de glissière 34. Lors de ce déplacement, la bielle de pivotement 38 toujours en butée contre la butée 30, entraine la rotation de l'assise 6 autour de l'axe de pivotement A-A dans un sens horaire. Lorsque les éléments mobiles 14, 16 arrivent sur les premiers segments de glissière, en particulier le dispositif d'ancrage 60 se reverrouille par exemple le pêne 62 se reverrouille sur la gâche 64, puis la deuxième extrémité 41 de la bielle de pivotement 38 s'écarte de la butée 30 et coulisse sur la rampe 28 en direction de l'avant de l'assise. L'assise est alors déplacée uniquement selon la direction longitudinale X.

En variante, lorsque la bielle de pivotement 38 n'est pas réalisée en matériau élastique et qu'elle n'est pas contrainte élastiquement sous le siège 2, c'est uniquement la force de l'actionneur 58 qui fait basculer l'assise 6 autour de l'axe de pivotement A-A.

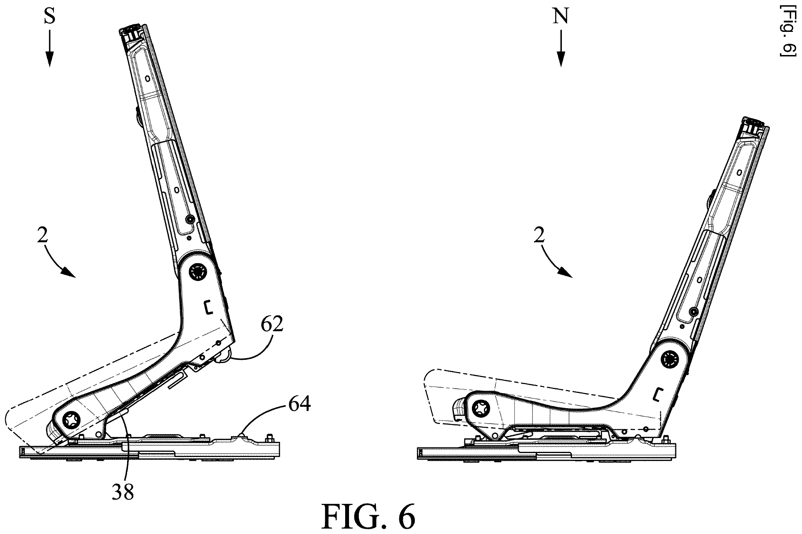

En référence à la figure 6, lorsqu'une demande de passage à la position «de sortie d'urgence » S est demandée par un passager par actionnement de l'organe de déverrouillage par exemple en tirant sur la sangle 68. L'organe de commande 66 transmet une commande de déverrouillage aux dispositifs d'ancrage 60. Les dispositifs d'ancrage commandent la rotation des pênes 62 et déverrouille l'ancrage de la partie arrière du cadre de siège aux éléments mobiles 14, 16. Le passager peut alors pousser manuellement le dossier pour faire pivoter l'assise autour de l'axe de pivotement A-A. Les éléments mobiles ne sont pas déplacés lors du passage à la position de sortie d'urgence. La position de sortie d'urgence S peut être mise en œuvre quelque soit la position des éléments mobiles 14, 16 sur les premiers segments de glissière 34.

En référence à la figure 5, lorsqu'un passage d'une position nominale N à une position avant maximale AM est demandée par un passager, les éléments mobiles 14,16 se déplacent uniquement sur les premiers segments de glissière 34 pour le réglage de la position longitudinale X de l'assise. Le dispositif d'ancrage 60 est maintenu verrouillé.

Le déverrouillage du dispositif d'ancrage peut être réalisé manuellement.

## Revendications

1. Siège (2) pour véhicule comprenant :
- un dossier (4),
- une assise (6) liée au dossier, l'assise comprenant au moins une rampe (28) s'étendant selon une direction longitudinale (X) et une butée (30) s'étendant selon une direction transversale (Y),
- au moins une glissière (10,12) s'étendant selon la direction longitudinale, ladite au moins une glissière (10,12) comportant un premier segment de glissière (34) et un deuxième segment de glissière (36),
- au moins un élément mobile (14,16) apte à être déplacé selon la direction longitudinale par rapport à ladite au moins une glissière, l'assise (6) étant montée pivotante par rapport à l'élément mobile autour d'un axe de pivotement (A-A) dirigé selon la direction transversale,
- au moins un organe d'articulation (40) fixe par rapport à ladite au moins une glissière (10,12), et
- une bielle de pivotement (38) ayant au moins une première extrémité (37, 39) et une deuxième extrémité (41), la première extrémité (37, 39) étant articulée audit au moins un organe d'articulation (40) autour d'un axe d'articulation (B-B) dirigé selon la direction transversale (Y), la deuxième extrémité (41) étant propre à coulisser contre la rampe (28) de l'assise lors du déplacement du au moins un élément mobile (14, 16) sur le premier segment de glissière (34), **caractérisé en ce que** la bielle de pivotement (38) est conformée pour pousser contre la rampe (28) et provoquer la rotation de l'assise autour de l'axe de pivotement (A-A), lors du déplacement du au moins un élément mobile (14, 16) sur le deuxième segment de glissière (36), la deuxième extrémité (41) de la bielle étant en appui contre la butée (30).

2. Siège selon la revendication 1, dans lequel le déplacement du au moins un élément mobile (14,16), lorsque ledit au moins un élément mobile est positionné sur le premier segment de glissière (34), fait pivoter l'assise (6) autour de l'axe de pivotement (A-A) et déplacer simultanément ledit au moins un élément mobile (14, 16) lorsque ledit au moins un élément mobile est positionné sur le deuxième segment de glissière (36).

3. Siège selon la revendication 1, qui comporte un unique actionneur (58) propre à déplacer uniquement ledit au moins un élément mobile (14,16), lorsque ledit au moins un élément mobile est positionné sur le premier segment de glissière (34), et à faire pivoter l'assise (6) autour de l'axe de pivotement (A-A) et déplacer simultanément ledit au moins un élément mobile (14, 16) lorsque ledit au moins un élément mobile est positionné sur le deuxième segment de glissière (36).

4. Siège selon l'une quelconque des revendications 1 à 3, dans lequel la bielle de pivotement (38) comporte au moins une branche de pivotement (46) et une première branche de fixation (48) coudée par rapport à la branche de pivotement, ledit au moins un organe d'articulation (40) est conformé pour posséder un premier profilé (52) délimitant un premier logement s'étendant selon la direction transversale (Y), la première branche de fixation (48) étant agencée dans ledit premier logement.

5. Siège selon l'une quelconque des revendications 1 à 4, dans lequel la bielle de pivotement (38) est réalisée dans un matériau flexible, et dans lequel ledit au moins un organe d'articulation (40) est propre à contraindre la bielle de pivotement dans une position dans laquelle sa deuxième extrémité (41) pousse sur la rampe (28) et contribue au pivotement de l'assise autour de l'axe de pivotement (A-A) lors du déplacement du au moins un élément mobile (14,16) sur le premier segment de glissière (34) et sur le deuxième segment de glissière (36).

6. Siège selon l'une quelconque des revendications 4 et 5, dans lequel la bielle de pivotement (38) comporte une deuxième branche de fixation (50) coudée par rapport à la première branche de fixation (48), la au moins une branche de pivotement (38) et la première branche de fixation (48) étant disposées dans un plan, la deuxième branche de fixation (50) formant un angle (α) supérieur à 20° avec ledit plan, et de préférence supérieur à 40°, et dans lequel l'organe d'articulation (40) est conformée pour posséder un deuxième profilé (54) délimitant un deuxième logement s'étendant selon la direction longitudinale (X), la deuxième branche de fixation (50) étant agencée dans ledit deuxième logement.

7. Siège selon l'une quelconque des revendications 1 à 6, qui comporte un dispositif d'ancrage (60) propre à verrouiller le pivotement de l'assise par rapport à ledit au moins un élément mobile, lors du déplacement du au moins un élément mobile (14, 16) sur le premier segment de glissière (34), le dispositif d'ancrage étant déverrouillé, lors du déplacement du au moins un élément mobile (14, 16) sur le deuxième segment de glissière (36).

8. Siège selon l'une quelconque des revendications 4 à 7, qui comprend deux glissières (10, 12) parallèles distantes selon la direction transversale (Y), et dans lequel la bielle de pivotement (38) présente une forme générale en U ayant une branche centrale d'appui (44), deux branches de pivotement (46), deux premières branches de fixation (48) et deux deuxièmes branches de fixation (50).

9. Siège selon la revendication 5, dans lequel le matériau flexible est réalisé en acier-ressort.

10. Siège selon l'une quelconque des revendications 3 à 9, dans lequel ledit actionneur (58) est un moteur électrique, ledit actionneur (58) étant propre à déplacer ledit au moins un élément mobile (14,16) du deuxième segment de glissière (36) vers le premier segment de glissière (34), ledit actionneur (58) et la bielle de pivotement (38) entrainant la rotation de l'assise (6) autour de l'axe de pivotement (A-A) dans un sens horaire et le déplacement de l'assise (6) selon la direction longitudinale (X) lorsque l'élément mobile (14, 16) est déplacé sur le premier segment de glissière (34).

11. Siège selon la revendication 7, qui comporte en outre un organe de commande (66) conformé pour déverrouiller le dispositif d'ancrage (60) et un contrôleur (70) propre à transmettre une commande de déverrouillage à l'organe de commande (66), lorsque l'assise (6) est déplacée du premier segment de glissière (34) vers le deuxième segment de glissière (36).

12. Siège selon l'une quelconque des revendications 7 et 11, dans lequel le dispositif d'ancrage (60) est propre à être déverrouillé manuellement quel que soit la position de l'élément mobile (14,16) sur le premier segment de glissière (34) et sur le deuxième segment de glissière (36).

13. Siège selon l'une quelconque des revendications 7 à 12, dans lequel ledit au moins un élément mobile (14,16) se déplace uniquement sur le premier segment de glissière (34) pour le réglage de la position longitudinale de l'assise, le dispositif d'ancrage (60) étant maintenu verrouillé.

14. Siège selon l'une quelconque des revendications 1 à 13, qui comporte une platine (56) fixée à ladite au moins une glissière (10, 12), ledit au moins un organe d'articulation (40) étant fixé sur ladite platine.

15. Siège selon l'une quelconque des revendications 1 à 13, dans lequel ledit au moins un organe d'articulation (40) est destiné à être fixé à un plancher d'un véhicule automobile.

16. Siège selon l'une quelconque des revendications 1 à 15, dans lequel la rampe (28) et la butée (30) sont formées par un support comportant une lumière dans laquelle la deuxième extrémité (41) de la bielle de pivotement est propre à se déplacer.

17. Siège selon l'une quelconque des revendications 1 à 16, dans lequel le premier segment de glissière (34) présente une longueur comprise entre 50 et 180 millimètres, et de préférence égale à 150 millimètres, et dans lequel le deuxième segment de glissière (36) présente une longueur comprise entre 30 et 70 millimètres, de préférence égale à 50 millimètres.

## Patentansprüche

1. Sitz (2) für ein Fahrzeug, umfassend:
- eine Sitzlehne (4),
- einen mit der Sitzlehne verbundenen Sitzboden (6), wobei der Sitzboden mindestens eine in Längsrichtung (X) verlaufende Rampe (28) und einen in Querrichtung (Y) verlaufenden Anschlag (30) umfasst,
- mindestens einen sich in Längsrichtung erstreckenden Schlitten (10, 12), wobei der mindestens eine Schlitten (10, 12) ein erstes Schlittensegment (34) und ein zweites Schlittensegment (36) umfasst,
- mindestens ein bewegliches Element (14, 16), das in Längsrichtung relativ zu dem mindestens einen Schlitten bewegt werden kann, wobei der Sitzboden (6) um eine in Querrichtung gerichtete Schwenkachse (A-A) relativ zu dem beweglichen Element schwenkbar angebracht ist,
- mindestens ein Gelenkelement (40), das in Bezug auf den mindestens einen Schlitten (10, 12) ortsfest ist, und
- eine schwenkbare Verbindungsstange (38) mit mindestens einem ersten Ende (37, 39) und einem zweiten Ende (41), wobei das erste Ende (37, 39) um eine in Querrichtung (Y) gerichtete Gelenkachse (B-B) an dem mindestens einen Gelenkelement (40) angelenkt ist und das zweite Ende (41) während der Bewegung des mindestens einen beweglichen Elements (14, 16) auf dem ersten Schlittensegment (34) an der Rampe (28) des Sitzbodens gleiten kann,
**dadurch gekennzeichnet, dass**
die schwenkbare Verbindungsstange (38) so geformt ist, dass sie gegen die Rampe (28) drückt und eine Drehung des Sitzbodens um die Schwenkachse (A-A) während der Bewegung des mindestens einen beweglichen Elements (14, 16) auf dem zweiten Schlittensegment (36) bewirkt, wobei das zweite Ende (41) der Verbindungsstange gegen den Anschlag (30) drückt.

2. Sitz gemäß Anspruch 1, wobei die Bewegung des mindestens einen beweglichen Elements (14, 16), wenn das mindestens eine bewegliche Element auf dem ersten Schlittensegment (34) positioniert ist, den Sitzboden (6) um die Schwenkachse (A-A) schwenkt und gleichzeitig das mindestens eine bewegliche Element (14, 16) bewegt, wenn das mindestens eine bewegliche Element auf dem zweiten Schlittensegment (36) positioniert ist.

3. Sitz gemäß Anspruch 1, der einen einzigen Aktuator (58) umfasst, der nur das mindestens eine bewegliche Element (14, 16) bewegen kann, wenn das mindestens eine bewegliche Element auf dem ersten Schlittensegment (34) positioniert ist, und der den Sitzboden (6) um die Schwenkachse (A-A) schwenken und gleichzeitig das mindestens eine bewegliche Element (14, 16) bewegen kann, wenn das mindestens eine bewegliche Element auf dem zweiten Schlittensegment (36) positioniert ist.

4. Sitz gemäß einem der Ansprüche 1 bis 3, wobei die Schwenkverbindungsstange (38) mindestens einen Schwenkschenkel (46) und einen ersten Befestigungsschenkel (48) umfasst, der relativ zu dem Schwenkschenkel gebogen ist, wobei das mindestens eine Gelenkelement (40) so geformt ist, dass es ein erstes Profil (52) aufweist, das eine erste Aufnahme begrenzt, die sich in der Querrichtung (Y) erstreckt, wobei der erste Befestigungsschenkel (48) in der ersten Aufnahme angeordnet ist.

5. Sitz gemäß einem der Ansprüche 1 bis 4, wobei die Schwenkverbindungsstange (38) aus einem flexiblen Material besteht und wobei das mindestens eine Gelenkelement (40) in der Lage ist, die Schwenkverbindungsstange in eine Position zu zwingen, in der ihr zweites Ende (41) auf die Rampe (28) drückt und während der Bewegung des mindestens einen beweglichen Elements (14, 16) auf dem ersten Schlittensegment (34) und auf dem zweiten Schlittensegment (36) zum Schwenken des Sitzbodens um die Schwenkachse (A-A) beiträgt.

6. Sitz gemäß einem der Ansprüche 4 und 5, wobei die Schwenkverbindungsstange (38) einen zweiten Befestigungsschenkel (50) umfasst, der relativ zu dem ersten Befestigungsschenkel (48) gebogen ist, wobei der mindestens eine Schwenkschenkel (38) und der erste Befestigungsschenkel (48) in einer Ebene angeordnet sind, wobei der zweite Befestigungsschenkel (50) mit der Ebene einen Winkel (α) von mehr als 20° und vorzugsweise mehr als 40° bildet, und wobei das Gelenkelement (40) so geformt ist, dass es ein zweites Profil (54) aufweist, das eine zweite Aufnahme begrenzt, die sich in der Längsrichtung (X) erstreckt, wobei der zweite Befestigungsschenkel (50) in der zweiten Aufnahme angeordnet ist.

7. Sitz gemäß einem der Ansprüche 1 bis 6, der eine Verankerungsvorrichtung (60) umfasst, die in der Lage ist, die Schwenkung des Sitzbodens relativ zu dem mindestens einen beweglichen Element während der Bewegung des mindestens einen beweglichen Elements (14, 16) auf dem ersten Schlittensegment (34) zu verriegeln, wobei die Verankerungsvorrichtung während der Bewegung des mindestens einen beweglichen Elements (14, 16) auf dem zweiten Schlittensegment (36) entriegelt ist.

8. Sitz gemäß einem der Ansprüche 4 bis 7, der zwei parallele Schlitten (10, 12) umfasst, die in Querrichtung (Y) beabstandet sind, und wobei die Schwenkverbindungsstange (38) eine allgemeine U-Form mit einem zentralen Halterungsschenkel (44), zwei Schwenkschenkeln (46), zwei ersten Befestigungsschenkeln (48) und zwei zweiten Befestigungsschenkeln (50) aufweist.

9. Sitz gemäß Anspruch 5, wobei das flexible Material aus Federstahl besteht.

10. Sitz nach einem der Ansprüche 3 bis 9, wobei der Aktuator (58) ein Elektromotor ist, wobei der Aktuator (58) in der Lage ist, das mindestens eine bewegliche Element (14, 16) des zweiten Schlittensegments (36) in Richtung des ersten Schlittensegments (34) zu bewegen, wobei der Aktuator (58) und die Schwenkverbindungsstange (38) die Drehung des Sitzbodens (6) um die Schwenkachse (A-A) im Uhrzeigersinn und die Bewegung des Sitzbodens (6) in Längsrichtung (X) antreiben, wenn das bewegliche Element (14, 16) auf dem ersten Schlittensegment (34) bewegt wird.

11. Sitz gemäß Anspruch 7, der außerdem ein Steuerelement (66) umfasst, das zum Entriegeln der Verankerungsvorrichtung (60) konfiguriert ist, sowie eine Steuerung (70), die in der Lage ist, einen Entriegelungsbefehl an das Steuerelement (66) zu übertragen, wenn der Sitzboden (6) vom ersten Schlittensegment (34) zum zweiten Schlittensegment (36) bewegt wird.

12. Sitz gemäß einem der Ansprüche 7 und 11, wobei die Verankerungsvorrichtung (60) unabhängig von der Position des beweglichen Elements (14, 16) auf dem ersten Schlittensegment (34) und auf dem zweiten Schlittensegment (36) manuell entriegelbar ist.

13. Sitz gemäß einem der Ansprüche 7 bis 12, wobei sich das mindestens eine bewegliche Element (14, 16) zur Einstellung der Längsposition des Sitzbodens nur auf dem ersten Schlittensegment (34) bewegt, wobei die Verankerungsvorrichtung (60) verriegelt gehalten wird.

14. Sitz gemäß einem der Ansprüche 1 bis 13, der eine Platte (56) umfasst, die an dem mindestens einen Schlitten (10, 12) angebracht ist, wobei das mindestens eine Gelenkelement (40) an der Platte angebracht ist.

15. Sitz gemäß einem der Ansprüche 1 bis 13, wobei das mindestens eine Gelenkelement (40) zur Befestigung an einem Boden eines Kraftfahrzeugs vorgesehen ist.

16. Sitz gemäß einem der Ansprüche 1 bis 15, wobei die Rampe (28) und der Anschlag (30) durch eine Halterung gebildet sind, die ein Loch aufweist, in dem sich das zweite Ende (41) der schwenkbaren Verbindungsstange bewegen kann.

17. Sitz gemäß einem der Ansprüche 1 bis 16, wobei das erste Schlittensegment (34) eine Länge zwischen 50 und 180 Millimetern, vorzugsweise von 150 Millimetern, aufweist und wobei das zweite Schlittensegment (36) eine Länge zwischen 30 und 70 Millimetern, vorzugsweise von 50 Millimetern, aufweist.

## Claims

1. A seat (2) for a vehicle comprising:
- a seat back (4),
- a seat bottom (6) connected to the seat back, the seat bottom comprising at least one ramp (28) extending in a longitudinal direction (X) and a stop (30) extending in a transverse direction (Y),
- at least one slide (10, 12) extending in the longitudinal direction, said at least one slide (10, 12) comprising a first slide segment (34) and a second slide segment (36),
- at least one movable element (14, 16) capable of being moved in the longitudinal direction with respect to said at least one slide, the seat bottom (6) being pivotally mounted with respect to the movable element about a pivot axis (A-A) directed in the transverse direction,
- at least one articulation member (40) that is stationary with respect to said at least one slide (10, 12), and
- a pivoting connecting rod (38) having at least one first end (37, 39) and one second end (41), the first end (37, 39) being articulated to said at least one articulation member (40) about an articulation axis (B-B) directed in the transverse direction (Y), the second end (41) being able to slide against the ramp (28) of the seat bottom during the movement of the at least one movable element (14, 16) on the first slide segment (34), **characterized in that**
the pivoting connecting rod (38) is shaped to push against the ramp (28) and to cause the seat bottom to rotate about the pivot axis (A-A), during the movement of the at least one movable element (14, 16) on the second slide segment (36), the second end (41) of the connecting rod bearing against the stop (30).

2. The seat according to claim 1, wherein the movement of the at least one movable element (14, 16), when said at least one movable element is positioned on the first slide segment (34), pivots the seat bottom (6) about the pivot axis (A-A) and simultaneously moves said at least one movable element (14, 16) when said at least one movable element is positioned on the second slide segment (36).

3. The seat according to claim 1, which comprises a single actuator (58) able to move only said at least one movable element (14, 16), when said at least one movable element is positioned on the first slide segment (34), and to pivot the seat bottom (6) about the pivot axis (A-A) and simultaneously move said at least one movable element (14, 16) when said at least one movable element is positioned on the second slide segment (36).

4. The seat according to any one of claims 1 to 3, wherein the pivoting connecting rod (38) comprises at least one pivot leg (46) and a first fastening leg (48) that is bent relative to the pivot leg, said at least one articulation member (40) is shaped to have a first profile (52) delimiting a first housing extending in the transverse direction (Y), the first fastening leg (48) being arranged in said first housing.

5. The seat according to any one of claims 1 to 4, wherein the pivoting connecting rod (38) is made of a flexible material, and wherein said at least one articulation member (40) is able to force the pivoting connecting rod into a position wherein its second end (41) pushes on the ramp (28) and contributes to pivoting the seat bottom about the pivot axis (A-A) during the movement of the at least one movable element (14, 16) on the first slide segment (34) and on the second slide segment (36).

6. The seat according to any one of claims 4 and 5, wherein the pivoting connecting rod (38) comprises a second fastening leg (50) that is bent relative to the first fastening leg (48), the at least one pivot leg (38) and the first fastening leg (48) being arranged in a plane, the second fastening leg (50) forming an angle (α) greater than 20° with said plane, and preferably greater than 40°, and wherein the articulation member (40) is shaped to have a second profile (54) delimiting a second housing extending in the longitudinal direction (X), the second fastening leg (50) being arranged in said second housing.

7. The seat according to any one of claims 1 to 6, which comprises an anchoring device (60) that is able to lock the pivoting of the seat bottom relative to said at least one movable element, during the movement of the at least one movable element (14, 16) on the first slide segment (34), the anchoring device being unlocked, during the movement of the at least one movable element (14, 16) on the second slide segment (36).

8. The seat according to any one of claims 4 to 7, which comprises two parallel slides (10, 12) that are distant in the transverse direction (Y), and wherein the pivoting connecting rod (38) has a general U shape having a central support leg (44), two pivot legs (46), two first fastening legs (48) and two second fastening legs (50).

9. The seat according to claim 5, wherein the flexible material is made of spring steel.

10. The seat according to any one of claims 3 to 9, wherein said actuator (58) is an electric motor, said actuator (58) being able to move said at least one movable element (14, 16) of the second slide segment (36) toward the first slide segment (34), said actuator (58) and the pivoting connecting rod (38) driving the rotation of the seat bottom (6) about the pivot axis (A-A) in a clockwise direction and the movement of the seat bottom (6) in the longitudinal direction (X) when the movable element (14, 16) is moved on the first slide segment (34).

11. The seat according to claim 7, which further comprises a control member (66) that is configured to unlock the anchoring device (60) and a controller (70) that is able to transmit an unlocking command to the control member (66) when the seat bottom (6) is moved from the first slide segment (34) toward the second slide segment (36).

12. The seat according to any one of claims 7 and 11, wherein the anchoring device (60) is able to be manually unlocked regardless of the position of the movable element (14, 16) on the first slide segment (34) and on the second slide segment (36).

13. The seat according to any one of claims 7 to 12, wherein said at least one movable element (14, 16) moves only on the first slide segment (34) for the adjustment of the longitudinal position of the seat bottom, the anchoring device (60) being held locked.

14. The seat according to any one of claims 1 to 13, which comprises a plate (56) attached to said at least one slide (10, 12), said at least one articulation member (40) being attached to said plate.

15. The seat according to any one of claims 1 to 13, wherein said at least one articulation member (40) is intended to be attached to a floor of a motor vehicle.

16. The seat according to any one of claims 1 to 15, wherein the ramp (28) and the stop (30) are formed by a support comprising a hole wherein the second end (41) of the pivoting connecting rod is able to move.

17. The seat according to any one of claims 1 to 16, wherein the first slide segment (34) has a length of between 50 and 180 millimeters, and preferably equal to 150 millimeters, and wherein the second slide segment (36) has a length of between 30 and 70 millimeters, preferably equal to 50 millimeters.
